# EUROPEAN PATENT APPLICATION

(11) **EP 4 815 338 A1**
(43) Date of publication of application: **30.09.2026**
(21) Application number: 25869651.7
(22) Date of filing: 02.07.2025
(51) Int. Cl.: H04B 10/25

(54) **AGGREGATION DEVICE, OPTICAL MODULE, AND OPTICAL NETWORK SYSTEM**

(30) Priority: 03.01.2025 CN 202510011944
(71) Applicant: Ruijie Networks Co., Ltd., Fuzhou, Fujian 350002 (CN)
(72) Inventor: WANG, Xiaojie, Fuzhou, Fujian 350002 (CN)
(74) Representative: Boult Wade Tennant LLP
(86) International application number: PCT/CN2025/106724
(87) International publication number: WO 2026/144082

(57) **Abstract**

This application provides an aggregation device, an optical module, and an optical network system. The aggregation device includes: a first port, configured to receive a plurality of downlink coupled optical signals in different wavelengths outputted by a core optical module; a first component, configured to split the downlink coupled optical signal to form a plurality of different downlink optical signals, and aggregate the plurality of received uplink optical signals into one uplink coupled optical signal and output the uplink coupled optical signal to a third port; a plurality of second ports, configured to output the plurality of downlink optical signals to corresponding bidirectional access optical modules among a plurality of bidirectional access optical modules respectively, receive a plurality of uplink optical signals in different wavelengths outputted by the plurality of bidirectional access optical modules, and output the uplink optical signals to the first component, where the plurality of second ports are correspondingly connected to the plurality of bidirectional access optical modules through a plurality of first single-core optical fibers; and the third port, configured to output the uplink coupled optical signal to the core optical module.

## Description

### CROSS-REFERENCE TO RELATED APPLICATIONS

This application claims priority to the Chinese Patent Application No. 202510011944.7, filed with the China National Intellectual Property Administration on January 3, 2025 and entitled "AGGREGATION DEVICE AND OPTICAL NETWORK SYSTEM", which is incorporated herein by reference in its entirety.

### TECHNICAL FIELD

This application relates to the field of communication technologies, and more specifically relates to an aggregation device, an optical module, and an optical network system.

### BACKGROUND

A campus optical network is an optical communication network applied in a campus, which uses optical fibers as a transmission medium to provide high-speed and reliable data connections for various departments, buildings, and devices within the campus. The campus optical network includes a core layer, an aggregation layer, and an access layer. The core layer is located at the center of the campus network and is configured to connect optical network devices of various buildings or areas to achieve high-speed data exchange and routing for the entire network; the aggregation layer is configured to connect optical network devices of various buildings or areas to the core layer, to aggregate and distribute data; and the access layer is configured to provide access services to user terminal devices in various buildings or areas, connect the user terminal devices to the campus optical network, and transmit data to the core layer through the aggregation layer.

In the related art, the aggregation layer is connected to optical network devices of the access layer through receiving optical fibers, so that the aggregation layer can receive uplink optical signals transmitted from the optical network devices of the access layer; and the aggregation layer is also connected to the optical network devices of the access layer through transmitting optical fibers, so that the aggregation layer can send downlink optical signals to the optical network devices of the access layer.

### SUMMARY

This application provides an aggregation device, an optical module, and an optical network system.

According to a first aspect, this application provides an aggregation device, including:
a first port, configured to receive a downlink coupled optical signal outputted by a core optical module, where the first port is configured to be connected to a core optical module, and the core optical module is arranged in a core layer of the communication network;
a plurality of first components, configured to split the downlink coupled optical signal from the first port to form a plurality of downlink optical signals when operating in a downlink optical signal transmission link, aggregate a plurality of uplink optical signals from a plurality of second ports into one uplink coupled optical signal when operating in an uplink optical signal transmission link, and output the uplink coupled optical signal to a third port;
the plurality of second ports, configured to receive the plurality of downlink optical signals from the plurality of first components, and output the plurality of downlink optical signals to corresponding bidirectional access optical modules among a plurality of bidirectional access optical modules respectively, where the plurality of second ports are further configured to receive a plurality of uplink optical signals in different wavelengths from the plurality of bidirectional access optical modules and output the plurality of uplink optical signals to the plurality of first components, the plurality of second ports are configured to be correspondingly connected to the plurality of bidirectional access optical modules through a plurality of first single-core optical fibers, and the plurality of bidirectional access optical modules are arranged in an access layer of the communication network; and
the third port, configured to output the uplink coupled optical signal to the core optical module.

In a possible implementation, the aggregation device includes:
a first wavelength division multiplexing component, including the first port, the plurality of first components, the plurality of second ports, and a plurality of first reflecting outputs, where the plurality of first reflecting outputs are configured to reflect the plurality of uplink optical signals to a plurality of corresponding fourth ports respectively, and the plurality of first reflecting outputs are correspondingly connected to the plurality of fourth ports in a second wavelength division multiplexing component; and
the second wavelength division multiplexing component, including the third port, the plurality of first components, and the plurality of fourth ports, where the plurality of fourth ports are configured to receive the plurality of uplink optical signals, and send the plurality of uplink optical signals to the plurality of first components.

In a possible implementation, the first wavelength division multiplexing component includes a plurality of first four-port wavelength division multiplexing devices, and each of the first four-port wavelength division multiplexing devices includes the first port, the first component, the second port, the first reflecting output, and a second reflecting output; where in the first wavelength division multiplexing component, the first port of one of the first four-port wavelength division multiplexing devices is connected to the core optical module, and in the remaining first four-port wavelength division multiplexing devices, the first port of one of two adjacent first four-port wavelength division multiplexing devices is connected to the second reflecting output of the other first four-port wavelength division multiplexing device, so that the plurality of first four-port wavelength division multiplexing devices are connected in series; and the second port of each of the first four-port wavelength division multiplexing devices is correspondingly connected to one of the bidirectional access optical modules. The second wavelength division multiplexing component includes a plurality of first three-port wavelength division multiplexing devices, and each of the first three-port wavelength division multiplexing devices includes the third port, the first component, the fourth port, and a first input; where in the second wavelength division multiplexing component, the third port of one of the first three-port wavelength division multiplexing devices is connected to the core optical module, and in the remaining first three-port wavelength division multiplexing devices, the first input of one of two adjacent first three-port wavelength division multiplexing devices is connected to the third port of the other first three-port wavelength division multiplexing device, so that the plurality of first three-port wavelength division multiplexing devices are connected in series; and the fourth port of each of the first three-port wavelength division multiplexing devices is correspondingly connected to the first reflecting output of one of the first four-port wavelength division multiplexing devices.

In a possible implementation, the first three-port wavelength division multiplexing device includes the first component, and the first component includes a single-fiber collimator, a dual-fiber collimator, and a first thin film filter, where the fourth port is arranged on the single-fiber collimator, the third port and the first input are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the first three-port wavelength division multiplexing devices are different. The first four-port wavelength division multiplexing device includes the first component, and the first component includes a first reflecting component and a second reflecting component, where the first reflecting component includes a first optical fiber and a second optical fiber, the first optical fiber includes the first port, the second optical fiber includes the second reflecting output, the second reflecting component includes a third optical fiber and a fourth optical fiber, the third optical fiber includes the second port, and the fourth optical fiber includes the first reflecting output.

In a possible implementation, the first wavelength division multiplexing component includes a plurality of third three-port wavelength division multiplexing devices, and each of the third three-port wavelength division multiplexing devices includes the first port, the first component, a third reflecting output, and a first output; where in the plurality of third three-port wavelength division multiplexing devices, the first port of one of the third three-port wavelength division multiplexing devices is connected to the core optical module, and in the remaining third three-port wavelength division multiplexing devices, the first port of one of two adjacent third three-port wavelength division multiplexing devices is connected to the third reflecting output of the other third three-port wavelength division multiplexing device, so that the plurality of third three-port wavelength division multiplexing devices are connected in series. The first wavelength division multiplexing component further includes a plurality of second three-port wavelength division multiplexing devices, and each of the second three-port wavelength division multiplexing devices includes the second port, the first component, the first reflecting output, and a second input, where the second input of each of the second three-port wavelength division multiplexing devices is correspondingly connected to the first output of one of the third three-port wavelength division multiplexing devices, so that the plurality of second three-port wavelength division multiplexing devices and the plurality of third three-port wavelength division multiplexing devices are correspondingly connected; and the second port of each of the second three-port wavelength division multiplexing devices is correspondingly connected to one of the bidirectional access optical modules. The second wavelength division multiplexing component includes a plurality of first three-port wavelength division multiplexing devices, and each of the first three-port wavelength division multiplexing devices includes the third port, the first component, the fourth port, and a first input. In the second wavelength division multiplexing component, the third port of one of the first three-port wavelength division multiplexing devices is connected to the core optical module, and in the remaining first three-port wavelength division multiplexing devices, the third port of one of two adjacent first three-port wavelength division multiplexing devices is connected to the first input of the other first three-port wavelength division multiplexing device, so that the plurality of first three-port wavelength division multiplexing devices are connected in series; and the fourth port of each of the first three-port wavelength division multiplexing devices is correspondingly connected to the first reflecting output of one of the second three-port wavelength division multiplexing devices. In a possible implementation, the first three-port wavelength division multiplexing device includes the first component, and the first component includes a dual-fiber collimator, a single-fiber collimator, and a first thin film filter, where the fourth port is arranged on the single-fiber collimator, the third port and the first input are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the first three-port wavelength division multiplexing devices are different. The second three-port wavelength division multiplexing device includes the first component, and the first component includes a dual-fiber collimator, a single-fiber collimator, and a first thin film filter, where the second input is arranged on the single-fiber collimator, the second port and the first reflecting output are arranged on the dual-fiber collimator, the first thin film filter is arranged on the collimating lens of the dual-fiber collimator, the first thin film filter allows light of some wavelengths to be transmitted and allows light of some other wavelengths to be reflected, and transmission wavelengths of the first thin film filters of the second three-port wavelength division multiplexing devices are different. The third three-port wavelength division multiplexing device includes the first component, and the first component includes a dual-fiber collimator, a single-fiber collimator, and a first thin film filter, where the first output is arranged on the single-fiber collimator of the third three-port wavelength division multiplexing device, the first port and the third reflecting output are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the third three-port wavelength division multiplexing devices are different.

In a possible implementation, the aggregation device includes a first wavelength division multiplexing component and a second wavelength division multiplexing component. The first wavelength division multiplexing component includes: the first port, the plurality of first components, and a plurality of first outputs, where the plurality of first outputs are configured to output the plurality of downlink optical signals to a plurality of corresponding fourth ports in the second wavelength division multiplexing component respectively. The second wavelength division multiplexing component includes the third port, the plurality of first components, the plurality of second ports, and the plurality of fourth ports, where the plurality of first outputs are correspondingly connected to the plurality of fourth ports, and the second wavelength division multiplexing component reflects the plurality of downlink optical signals to a plurality of corresponding bidirectional access optical modules respectively through the plurality of second ports.

In a possible implementation, the first wavelength division multiplexing component includes a plurality of third three-port wavelength division multiplexing devices, and each of the third three-port wavelength division multiplexing devices includes the first port, a third reflecting output, the first component, and the first output; where in the first wavelength division multiplexing component, the first port of one of the third three-port wavelength division multiplexing devices is connected to the core optical module, and in the remaining third three-port wavelength division multiplexing devices, the first port of one of two adjacent third three-port wavelength division multiplexing devices is connected to the third reflecting output of the other third three-port wavelength division multiplexing device, so that the plurality of third three-port wavelength division multiplexing devices are connected in series. The second wavelength division multiplexing component includes a plurality of first three-port wavelength division multiplexing devices, and each of the first three-port wavelength division multiplexing devices includes the fourth port, the first component, the third port, and a first input; where in the plurality of first three-port wavelength division multiplexing devices, the third port of one of the first three-port wavelength division multiplexing devices is connected to the core optical module, and in the remaining first three-port wavelength division multiplexing devices, the third port of one of two adjacent first three-port wavelength division multiplexing devices is connected to the first input of the other first three-port wavelength division multiplexing device, so that the plurality of first three-port wavelength division multiplexing devices are connected in series. The second wavelength division multiplexing component further includes a plurality of fourth three-port wavelength division multiplexing devices, and each of the fourth three-port wavelength division multiplexing devices includes the second port, the first component, a second output, and a fourth input; where the fourth input of each of the fourth three-port wavelength division multiplexing devices is correspondingly connected to the first output of one of the third three-port wavelength division multiplexing devices, so that the plurality of fourth three-port wavelength division multiplexing devices and the plurality of third three-port wavelength division multiplexing devices are correspondingly connected; the second port of each of the fourth three-port wavelength division multiplexing devices is correspondingly connected to one of the bidirectional access optical modules; and the second output of each of the fourth three-port wavelength division multiplexing devices is correspondingly connected to the fourth port of one of the first three-port wavelength division multiplexing devices.

In a possible implementation, the first three-port wavelength division multiplexing device includes the first component, and the first component includes a dual-fiber collimator, a single-fiber collimator, and a first thin film filter, where the fourth port is arranged on the single-fiber collimator, the third port and the first input are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the first three-port wavelength division multiplexing devices are different. The third three-port wavelength division multiplexing device includes the first component, and the first component includes a dual-fiber collimator, a single-fiber collimator, and a first thin film filter, where the first output is arranged on the single-fiber collimator, the first port and the third reflecting output are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the third three-port wavelength division multiplexing devices are different. The fourth three-port wavelength division multiplexing device includes the first component, and the first component includes a dual-fiber collimator, a single-fiber collimator, and a first thin film filter, where the second output is arranged on the single-fiber collimator, the second port and the fourth input are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the fourth three-port wavelength division multiplexing devices are different.

In a possible implementation, the first wavelength division multiplexing component includes a plurality of third three-port wavelength division multiplexing devices, and each of the third three-port wavelength division multiplexing devices includes the first port, the first component, a third reflecting output, and a first output; where in the first wavelength division multiplexing component, the first port of one of the third three-port wavelength division multiplexing devices is connected to the core optical module, and in the remaining third three-port wavelength division multiplexing devices, the first port of one of two adjacent third three-port wavelength division multiplexing devices is connected to the third reflecting output of the other third three-port wavelength division multiplexing device, so that the plurality of third three-port wavelength division multiplexing devices are connected in series. The second wavelength division multiplexing component includes a plurality of second four-port wavelength division multiplexing devices, and each of the second four-port wavelength division multiplexing devices includes the third port, the fourth port, the first component, the second port, and a third input; where in the second wavelength division multiplexing component, the third port of one of the second four-port wavelength division multiplexing devices is connected to the core optical module, and in the remaining second four-port wavelength division multiplexing devices, the third input of one of two adjacent second four-port wavelength division multiplexing devices is connected to the third port of the other second four-port wavelength division multiplexing device, so that the plurality of second four-port wavelength division multiplexing devices are connected in series; the second port of each of the second four-port wavelength division multiplexing devices is correspondingly connected to one of the bidirectional access optical modules; and the fourth port of each of the second four-port wavelength division multiplexing devices is correspondingly connected to the first output of one of the third three-port wavelength division multiplexing devices, so that the plurality of second four-port wavelength division multiplexing devices and the plurality of third three-port wavelength division multiplexing devices are correspondingly connected.

In a possible implementation, the third three-port wavelength division multiplexing device includes the first component, and the first component includes a dual-fiber collimator, a single-fiber collimator, and a first thin film filter, where the first output is arranged on the single-fiber collimator, the first port and the third reflecting output are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the third three-port wavelength division multiplexing devices are different. The second four-port wavelength division multiplexing device includes the first component, and the first component includes a first reflecting component and a second reflecting component, where the first reflecting component includes a first optical fiber and a second optical fiber, the second reflecting component includes a third optical fiber and a fourth optical fiber, the first optical fiber includes the fourth port, the third optical fiber includes the third input, the second optical fiber includes the second port, and the fourth optical fiber includes the third port.

In a possible implementation, the first reflecting component further includes a first focusing lens and a first WDM filter. The first focusing lens is arranged on a first dual optical fiber, and the first WDM filter is arranged on the first focusing lens. The first dual optical fiber includes the first optical fiber and the second optical fiber. The second reflecting component further includes a second focusing lens and a second WDM filter. The second focusing lens is arranged on a second dual optical fiber, and the second WDM filter is arranged on the second focusing lens. The second dual optical fiber includes the third optical fiber and the fourth optical fiber.

In a possible implementation, the first four-port wavelength division multiplexing device or the second four-port wavelength division multiplexing device further includes a first glass tube, a second glass tube, and a third glass tube. The first glass tube is configured to connect the first reflecting component and the second reflecting component. The second glass tube is arranged in the first glass tube. The first reflecting component is arranged in the second glass tube, and the third glass tube is arranged in the first glass tube. The second reflecting component is arranged in the third glass tube.

In a possible implementation, the aggregation device further includes a connection port. The connection port is connected to the core optical module through a second single-core optical fiber, and the first port and the third port are both connected to the connection port.

In a possible implementation, the aggregation device includes a thin film filter type device or an array waveguide grating.

According to a second aspect, this application provides a bidirectional access optical module, including: a downlink optical signal input, configured to input a downlink optical signal from an aggregation device; a sending end, configured to output the downlink optical signal and input an uplink optical signal; an uplink optical signal output, configured to output the uplink optical signal to the aggregation device; and a second thin film filter, configured to transmit the downlink optical signal to the sending end and reflect the uplink optical signal to the uplink optical signal output; where the second thin film filter is obliquely arranged on an optical path for the uplink optical signal and the downlink optical signal.

In a possible implementation, the second thin film filter is arranged at an inclination angle of 0 degrees to 45 degrees.

According to a third aspect, this application provides an optical network system, including a core optical module arranged in a core layer of a communication network, the aggregation device described in any implementation of the first aspect, and the bidirectional access optical module described in any implementation of the second aspect.

For any bidirectional access optical module, the aggregation device provided by embodiments of this application, in combination with a wavelength division multiplexing technology, can achieve a communication connection with this bidirectional access optical module through only one single-core optical fiber, so that this bidirectional access optical module can send and receive optical signals through one single-core optical fiber, so that a quantity of the optical fibers in the access layer is reduced by 50%, to reduce installation costs of an optical network system, simplify optical links, and reduce the troubleshooting difficulty in operation and maintenance.

In addition to the technical problems solved by the embodiments of this disclosure described above, technical features constituting technical solutions, and the beneficial effects brought by the technical features of these technical solutions, other technical problems that can be solved by a chassis and a mobility vehicle provided by the embodiments of this application, other technical features included in the technical solutions, and the beneficial effects brought by these technical features are further described in detail in specific embodiments.

### BRIEF DESCRIPTION OF DRAWINGS

To more clearly illustrate the technical solutions in the embodiments of this application, the accompanying drawings to be used in the embodiments are briefly introduced below. Obviously, the accompanying drawings described below are some embodiments of this application. For those of ordinary skill in the art, other accompanying drawings can also be obtained based on these accompanying drawings without creative efforts.
FIG. 1 is a schematic structural diagram of an optical network system in the related art;
FIG. 2 is a schematic structural diagram of an aggregation device in the related art;
FIG. 3 is a schematic structural diagram of an optical network system provided by an embodiment of this application;
FIG. 4 is a first schematic structural diagram of an aggregation device provided by an embodiment of this application;
FIG. 5 is a schematic structural diagram of a first three-port wavelength division multiplexing device provided by an embodiment of this application;
FIG. 6 is a first schematic structural diagram of a first four-port wavelength division multiplexing device provided by an embodiment of this application;
FIG. 7 is a second schematic structural diagram of a first four-port wavelength division multiplexing device provided by an embodiment of this application;
FIG. 8 is a second schematic structural diagram of an aggregation device provided by an embodiment of this application;
FIG. 9 is a schematic structural diagram of a third three-port wavelength division multiplexing device provided by an embodiment of this application;
FIG. 10 is a schematic structural diagram of a second four-port wavelength division multiplexing device provided by an embodiment of this application;
FIG. 11 is a third schematic structural diagram of an aggregation device provided by an embodiment of this application;
FIG. 12 is a schematic structural diagram of a second three-port wavelength division multiplexing device provided by an embodiment of this application;
FIG. 13 is a fourth schematic structural diagram of an aggregation device provided by an embodiment of this application;
FIG. 14 is a schematic structural diagram of a fourth three-port wavelength division multiplexing device provided by an embodiment of this application; and
FIG. 15 is a schematic structural diagram of a bidirectional access optical module provided by an embodiment of this application.

Reference numerals in the accompanying drawings:
100. core layer;
101. core optical module; 110. demultiplexing component; 120. multiplexing component;
200. aggregation device;
201. first four-port wavelength division multiplexing device; 202. second four-port wavelength division multiplexing device;
203. connection port; 204. first reflecting component; 205. second reflecting component; 210. first port; 220. second port; 230. third port; 240. fourth port; 250. first reflecting output; 260. first component;
211. first wavelength division multiplexing component; 212. second wavelength division multiplexing component;
231. first glass tube; 232. second glass tube; 233. third glass tube; 234. first focusing lens; 235. first WDM filter;
2021. dual-fiber collimator; 2022. single-fiber collimator; 2023. first thin film filter;
2011. second input; 2012. fourth input; 2013. first input; 2014. second output; 2015. first output; 2016. third reflecting output; 2042. second reflecting output; 2051. third input;
300. access layer;
301. bidirectional access optical module; 310. receiving optical fiber; 320. transmitting optical fiber;
3011. downlink optical signal input; 3012. uplink optical signal output; 3013. sending end; 3014. second thin film filter; 3015. downlink optical signal; 3016. uplink optical signal;
401. second single-core optical fiber; 402. first single-core optical fiber;
501. first three-port wavelength division multiplexing device; 502. second three-port wavelength division multiplexing device; 503. third three-port wavelength division multiplexing device; and 504. fourth three-port wavelength division multiplexing device.

### DESCRIPTION OF EMBODIMENTS

To make the objectives, technical solutions, and advantages of this application clearer, this application is further described in detail below with reference to the accompanying drawings. Specific operation methods in method embodiments may also be used in apparatus embodiments or system embodiments. It should be noted that in the description of this application, "a plurality of" is understood as "at least two", and "and/or" describes an association relationship of associated objects, indicating that there may be three relationships. For example, A and/or B may indicate the following three cases: only A is present; both A and B are present; and only B is present. A being connected to B may indicate the following two cases: A and B are directly connected; and A and B are connected through C. In addition, in the description of this application, words such as "first" and "second" are only used for the purpose of distinguishing descriptions, and cannot be understood as indicating or implying relative importance, nor indicating or implying an order.

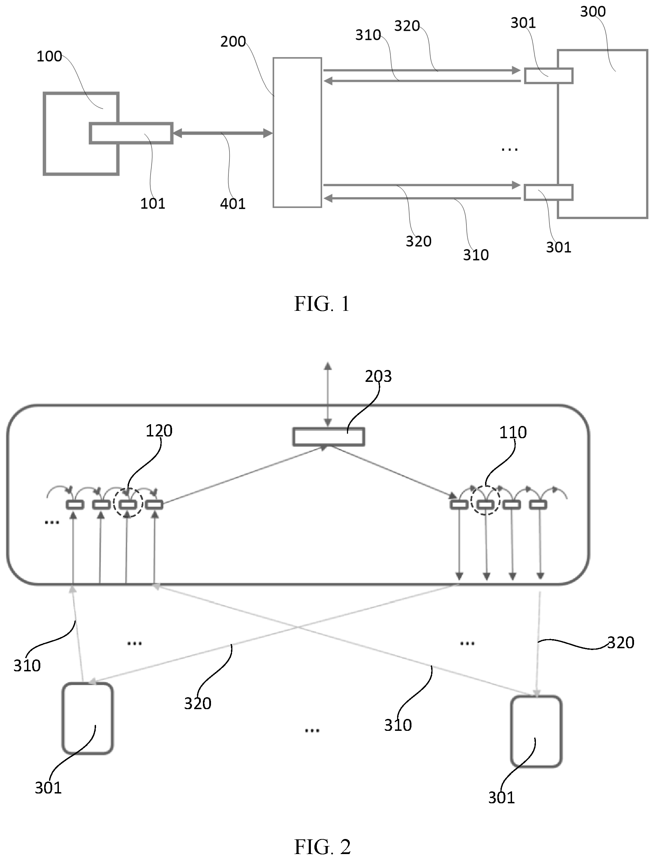

As shown in FIG. 1, an optical network system in the related art includes: a core optical module 101 arranged in a core layer 100, a plurality of bidirectional access optical modules 301 arranged in an access layer 300, and an aggregation device 200 for connecting the plurality of bidirectional access optical modules 301 to the core optical module 101. The core optical module 101 is configured to output a plurality of downlink optical signals in different wavelengths, and the plurality of bidirectional access optical modules 301 are configured to output a plurality of uplink optical signals in different wavelengths. A port of the core optical module 101 is connected to the aggregation device 200 through an optical fiber, and each bidirectional access optical module 301 is connected to the aggregation device 200 through a receiving optical fiber 310 and a transmitting optical fiber 320.

The plurality of downlink optical signals outputted by the core optical module 101 enter the aggregation device 200 through optical fibers, and the aggregation device 200 outputs the plurality of downlink optical signals to corresponding bidirectional access optical modules 301 respectively through a plurality of transmitting optical fibers 320. The plurality of uplink optical signals in different wavelengths outputted by the plurality of bidirectional access optical modules 301 enter the aggregation device 200 through corresponding receiving optical fibers 310, and the aggregation device 200, serving as a multiplexing device, aggregates the plurality of uplink optical signals into one signal and then outputs the signal to the core optical module 101 through optical fibers. The receiving optical fiber 310 and the transmitting optical fiber 320 herein are described from the perspective of the aggregation device 200. The receiving optical fiber 310 refers to an optical fiber through which the aggregation device 200 receives optical signals, and the transmitting optical fiber 320 refers to an optical fiber through which the aggregation device 200 sends optical signals.

As shown in FIG. 2, the aggregation device 200 in the related art includes a demultiplexing component 110 and a multiplexing component 120. Each bidirectional access optical module 301 is connected to the demultiplexing component 110 through the transmitting optical fiber 320, and each bidirectional access optical module 301 is connected to the multiplexing component 120 through the receiving optical fiber 310. After entering the aggregation device 200 through a first port 210 of the aggregation device 200, the plurality of downlink optical signals outputted by the core optical module 101 are first outputted to the demultiplexing component 110, and then the demultiplexing component 110 demultiplexes the plurality of downlink optical signals and outputs the downlink optical signals to a plurality of corresponding bidirectional access optical modules 301 respectively. The plurality of uplink optical signals in different wavelengths outputted by the plurality of bidirectional access optical modules 301 are outputted to the multiplexing component 120 through the receiving optical fibers 310, and the multiplexing component 120 aggregates the plurality of uplink optical signals in different wavelengths into one signal and then outputs the signal to the core optical module 101 through optical fibers.

That is, in the related art, each bidirectional access optical module 301 is connected to the aggregation device 200 through dual optical fibers, so that a large quantity of optical fibers are used, leading to high construction costs and difficulty in maintenance.

A wavelength division multiplexing (WDM) technology refers to a technology in which a plurality of optical signals in different wavelengths are used to simultaneously transmit data in optical fiber communication. This technology allows a plurality of independent optical signals to be transmitted simultaneously through one optical fiber, thereby greatly increasing the transmission capacity of the optical fiber. An operating principle of WDM is that optical signals in different wavelengths are combined by a multiplexer for transmission in one optical fiber, and at a receiving end, these optical signals are split by a demultiplexer.

Embodiments of this application provide an aggregation device arranged in an aggregation layer of a communication network. The aggregation device, in combination with the wavelength division multiplexing technology, is connected to one bidirectional access optical module of an access layer through only one single-core optical fiber, so that each bidirectional access optical module sends and receives optical signals through one single-core optical fiber. Therefore, the aggregation device provided by this embodiment of this application reduces the quantity of the optical fibers in the access layer by 50%, to reduce installation costs of an optical network system, simplify optical links, and reduce the troubleshooting difficulty in operation and maintenance.

To make the above objectives, features, and advantages of the embodiments of this application more obvious and easier to understand, the technical solutions in the embodiments of this application are clearly and thoroughly described below with reference to the accompanying drawings in the embodiments of this application. Obviously, the described embodiments are only some embodiments rather than all embodiments of this application. Based on the embodiments of this application, all other embodiments obtained by those of ordinary skill in the art without creative efforts shall fall within the protection scope of this application.

The aggregation device provided by the embodiments of this application is applied in an optical network system of a campus optical network.

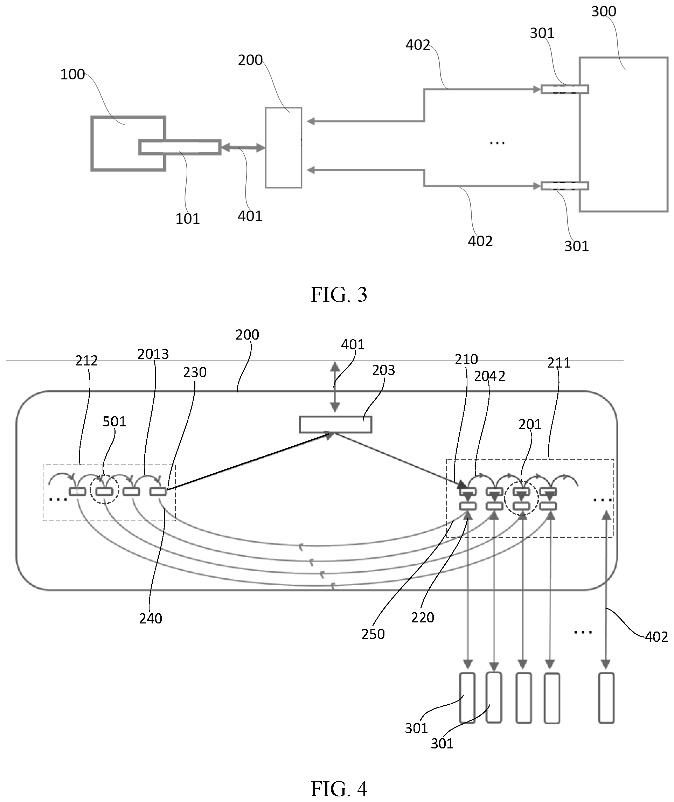

As shown in FIG. 3 and FIG. 4, an aggregation device 200 provided by an embodiment of this application includes: a first port 210, a plurality of second ports 220, and a third port 230.

The first port 210 is configured to be connected to a core optical module 101. The core optical module 101 is arranged in a core layer network device and is configured to output a plurality of downlink optical signals in different wavelengths. Optical signals in different wavelengths can carry different information streams. The plurality of downlink optical signals in different wavelengths outputted by the core optical module 101 may be one downlink coupled optical signal formed after a plurality of optical signals in different wavelengths are combined. The first port 210 is configured to receive the downlink coupled optical signal outputted by the core optical module 101.

The first port 210 may be connected to the core optical module 101 through a second single-core optical fiber 401, and a plurality of optical signals in different wavelengths in the downlink coupled optical signal are transmitted in one optical fiber without interfering with each other. The first port 210 receives the downlink coupled optical signal from the core optical module 101. When the downlink coupled optical signal passes through the aggregation device 200, the aggregation device 200, serving as a demultiplexer, splits the downlink coupled optical signal from the core optical module 101 into a plurality of downlink optical signals in different wavelengths and then outputs the downlink optical signals respectively. The aggregation device 200 serving as a demultiplexer may mean that the aggregation device 200 includes a component that can achieve an optical signal demultiplexing function, that is, a component that can split the downlink coupled optical signal into a plurality of downlink optical signals in different wavelengths.

The second single-core optical fiber 401 refers to an optical fiber with only one fiber core, suitable for long-distance high-speed transmission in the fields such as optical fiber communication and optical fiber sensing. The first port 210 may alternatively be connected to the core optical module 101 through a dual-core optical fiber. A dual-core optical fiber refers to an optical fiber with two fiber cores, suitable for short-distance transmission in the fields such as data centers and local area networks.

The plurality of second ports 220 are correspondingly connected to a plurality of bidirectional access optical modules 301, and each second port 220 is connected to a corresponding bidirectional access optical module 301 through one first single-core optical fiber 402. The plurality of second ports 220 are configured to output the plurality of downlink optical signals obtained after splitting to the corresponding bidirectional access optical modules 301 respectively. To be specific, the downlink coupled optical signal from the core optical module 101 is split by the aggregation device 200 into a plurality of downlink optical signals in different wavelengths, then reaches the plurality of second ports 220, and are outputted to the corresponding bidirectional access optical modules 301 respectively through a plurality of first single-core optical fibers 402.

The plurality of bidirectional access optical modules 301 are configured to output a plurality of uplink optical signals in different wavelengths, and the uplink optical signal in each wavelength can carry different information streams. The plurality of second ports 220 are further configured to receive a plurality of uplink optical signals in different wavelengths outputted by the plurality of corresponding bidirectional access optical modules 301. To be specific, when the plurality of bidirectional access optical modules 301 output a plurality of uplink optical signals in different wavelengths, the plurality of uplink optical signals in different wavelengths are outputted to the corresponding second ports 220 respectively through the first single-core optical fiber 402, so that the plurality of uplink optical signals in different wavelengths outputted by the plurality of bidirectional access optical modules 301 enter the aggregation device 200.

When the plurality of uplink optical signals in different wavelengths pass through the aggregation device 200, the aggregation device 200, serving as a multiplexer, aggregates the plurality of uplink optical signals in different wavelengths from the plurality of bidirectional access optical modules 301 into one uplink coupled optical signal and then outputs the uplink coupled optical signal to the third port 230. The third port 230 is further configured to be connected to the core optical module 101, and the third port 230 is configured to transmit the uplink coupled optical signal to the core optical module 101 through the second single-core optical fiber 401. The aggregation device 200 serving as a multiplexer may mean that the aggregation device 200 includes a component that can achieve an optical signal multiplexing function, that is, a component that can aggregate a plurality of uplink optical signals in different wavelengths into one uplink coupled optical signal.

For each bidirectional access optical module 301, the aggregation device 200 provided by this embodiment of this application is connected to this bidirectional access optical module 301 through the first single-core optical fiber 402, so that downlink optical signals outputted by the core optical module 101 and uplink optical signals outputted by the bidirectional access optical module 301 are both transmitted through the first single-core optical fiber 402, reducing the quantity of the optical fibers in the access layer by 50%, thereby lowering installation costs of an optical network system, simplifying optical links, and reducing the troubleshooting difficulty in operation and maintenance.

As shown in FIG. 3, an embodiment of this application further provides an optical network system. The optical network system includes: a core optical module 101, an aggregation device 200, and a plurality of bidirectional access optical modules 301. The core optical module 101 is located in a core layer 100, the core optical module 101 is configured to output a plurality of downlink optical signals in different wavelengths, and the downlink optical signal in each wavelength can carry different information streams. The core optical module 101 may be an optical device including an optical transceiver chip and other related circuits that are integrated in one module, for converting electrical signals into optical signals for transmission and converting optical signals into electrical signals at a receiving end.

In a possible implementation, the core optical module 101 may also be integrated with a wavelength division multiplexing function for combining a plurality of downlink optical signals in different wavelengths into one signal and then outputting a downlink coupled optical signal. Therefore, in the core optical module 101, a plurality of optical signals in different wavelengths can be transmitted in one optical fiber without interfering with each other, greatly reducing costs of optical links.

The aggregation device 200 is located in an aggregation layer, the plurality of bidirectional access optical modules 301 are located in an access layer, and the plurality of bidirectional access optical modules 301 are configured to output a plurality of uplink optical signals in different wavelengths. The uplink optical signal in each wavelength can carry different information streams.

As shown in FIG. 4, in an embodiment of this application, the aggregation device 200 may include a first wavelength division multiplexing component 211 and a second wavelength division multiplexing component 212. The first wavelength division multiplexing component 211 includes a first port 210, a plurality of second ports 220, and a plurality of first reflecting outputs 250. The second wavelength division multiplexing component 212 includes a third port 230 and a plurality of fourth ports 240.

The first wavelength division multiplexing component 211 receives, through the first port 210, one downlink coupled optical signal formed by combination. The first wavelength division multiplexing component 211, serving as a demultiplexer, splits a downlink coupled optical signal from the core optical module 101 into a plurality of downlink optical signals in different wavelengths, then outputs the downlink optical signals to the plurality of second ports 220 respectively, and outputs the plurality of downlink optical signals to a plurality of corresponding bidirectional access optical modules 301 respectively through a first single-core optical fiber 402, thereby completing the transmission of one downlink coupled optical signal that is formed by combination. The first wavelength division multiplexing component 211 serving as a demultiplexer may mean that the first wavelength division multiplexing component 211 includes a component that can achieve an optical signal demultiplexing function, that is, a component that can split the downlink coupled optical signal into a plurality of downlink optical signals in different wavelengths.

The first wavelength division multiplexing component 211 further receives a plurality of uplink optical signals in different wavelengths outputted by the plurality of bidirectional access optical modules 301 through the plurality of second ports 220, and outputs the plurality of uplink optical signals in different wavelengths to the second wavelength division multiplexing component 212 through the plurality of first reflecting outputs 250. The second wavelength division multiplexing component 212, serving as a multiplexer, aggregates the plurality of uplink optical signals in different wavelengths into one signal and transmits the signal to the core optical module 101 through the third port 230, thereby completing the transmission of the plurality of uplink optical signals in different wavelengths. The second wavelength division multiplexing component 212 serving as a multiplexer may mean that the second wavelength division multiplexing component 212 includes a component that can achieve an optical signal multiplexing function, that is, a component that can aggregate a plurality of uplink optical signals in different wavelengths into one uplink coupled optical signal.

Specifically, the plurality of bidirectional access optical modules 301 output a plurality of uplink optical signals in different wavelengths respectively, and the plurality of uplink optical signals in different wavelengths are outputted to the corresponding second ports 220 respectively through the first single-core optical fiber 402, so that the plurality of uplink optical signals in different wavelengths are transmitted to the first wavelength division multiplexing component 211. The first wavelength division multiplexing component 211 can reflect the plurality of uplink optical signals in different wavelengths and output the plurality of uplink optical signals in different wavelengths from the first wavelength division multiplexing component 211 through the plurality of first reflecting outputs 250.

The plurality of first reflecting outputs 250 are also correspondingly connected to the plurality of fourth ports 240, so that the plurality of uplink optical signals in different wavelengths outputted from the first wavelength division multiplexing component 211 enter the second wavelength division multiplexing component 212 through the plurality of fourth ports 240. The second wavelength division multiplexing component 212, serving as a multiplexer, aggregates the plurality of uplink optical signals in different wavelengths into one signal and transmits the signal to the core optical module 101 through the third port 230, thereby completing the transmission of the plurality of uplink optical signals in different wavelengths.

In this embodiment of this application, the aggregation device 200 may further include a connection port 203, and the connection port 203 is connected to the core optical module 101 through a second single-core optical fiber 401. In addition, the first port 210 and the third port 230 are both connected to the connection port 203, thereby enabling the second single-core optical fiber 401 to be connected to both the first wavelength division multiplexing component 211 and the second wavelength division multiplexing component 212.

Referring to FIG. 4, FIG. 5, and FIG. 6, in an embodiment of this application, the first wavelength division multiplexing component 211 may include a plurality of first four-port wavelength division multiplexing devices 201, and the second wavelength division multiplexing component 212 may include a plurality of first three-port wavelength division multiplexing devices 501.

The first four-port wavelength division multiplexing device 201 includes: a first port 210, a second port 220, a first reflecting output 250, and a second reflecting output 2042.

The first three-port wavelength division multiplexing device 501 includes: a fourth port 240, a third port 230, and a first input 2013.

In the first wavelength division multiplexing component 211, the first port 210 of one first four-port wavelength division multiplexing device 201 is connected to the connection port 203, and in the remaining first four-port wavelength division multiplexing devices 201, the second reflecting output 2042 of one of two adjacent first four-port wavelength division multiplexing devices 201 is connected to the first port 210 of the other first four-port wavelength division multiplexing device 201, so that the plurality of first four-port wavelength division multiplexing devices 201 are connected in series. The second port 220 of each first four-port wavelength division multiplexing device 201 is connected to one corresponding bidirectional access optical module 301 through the first single-core optical fiber 402, and the first reflecting output 250 of each first four-port wavelength division multiplexing device 201 is connected to the fourth port 240 of one corresponding first three-port wavelength division multiplexing device 501.

In the second wavelength division multiplexing component 212, the third port 230 of one first three-port wavelength division multiplexing device 501 is connected to the connection port 203, and in the remaining first three-port wavelength division multiplexing devices 501, the third port 230 of one of two adjacent first three-port wavelength division multiplexing devices 501 is connected to the first input 2013 of the other first three-port wavelength division multiplexing device 501, so that the plurality of first three-port wavelength division multiplexing devices 501 are connected in series.

A transmission path for a plurality of downlink coupled optical signals in different wavelengths that are combined into one signal includes the following processes.

The plurality of downlink coupled optical signals in different wavelengths that are combined into one signal are transmitted to the first port 210 of the 1st first four-port wavelength division multiplexing device 201 through the connection port 203. The 1st first four-port wavelength division multiplexing device 201 allows a downlink optical signal in a wavelength λ1 to be transmitted and allows downlink optical signals in other wavelengths to be reflected. Thus, the 1st first four-port wavelength division multiplexing device 201 transmits the downlink optical signal in the wavelength λ1 out of this first four-port wavelength division multiplexing device 201 through the second port 220 and outputs this downlink optical signal to a corresponding first bidirectional access optical module 301. In addition, the 1st first four-port wavelength division multiplexing device 201 further reflects the downlink optical signals in other wavelengths to the 2nd first four-port wavelength division multiplexing device 201 through the second reflecting output 2042.

The 2nd first four-port wavelength division multiplexing device 201 allows a downlink optical signal in a wavelength λ2 to be transmitted and allows downlink optical signals in other wavelengths to be reflected. Thus, the 2nd first four-port wavelength division multiplexing device 201 transmits the downlink optical signal in the wavelength λ2 out of this first four-port wavelength division multiplexing device 201 through the second port 220 and outputs this downlink optical signal to a corresponding second bidirectional access optical module 301. The 2nd first four-port wavelength division multiplexing device 201 further reflects the downlink optical signals in other wavelengths to the 3rd first four-port wavelength division multiplexing device 201 through the second reflecting output 2042.

In this way, the first wavelength division multiplexing component 211 splits one downlink coupled optical signal that is formed by combination into a plurality of downlink optical signals in different wavelengths, and transmits the plurality of downlink optical signals to corresponding bidirectional access optical modules 301 through a plurality of second ports 220.

A transmission path for a plurality of uplink optical signals in different wavelengths includes the following processes.

A plurality of uplink optical signals in different wavelengths are transmitted to a plurality of corresponding first four-port wavelength division multiplexing devices 201 through corresponding second ports 220 respectively. Each first four-port wavelength division multiplexing device 201 allows the uplink optical signals to be reflected, so that the plurality of uplink optical signals in different wavelengths are respectively outputted to one corresponding first three-port wavelength division multiplexing device 501 through a plurality of first reflecting outputs 250.

A plurality of fourth ports 240 of a plurality of first three-port wavelength division multiplexing devices 501 arranged in sequence from left to right are configured to receive uplink optical signals in wavelengths n1, n2, n3, ..., and the like.

From left to right, the 1st first three-port wavelength division multiplexing device 501 allows the uplink optical signal in the wavelength n1 to be transmitted and transmits the uplink optical signal in the wavelength n1 to the first input 2013 of the 2nd first three-port wavelength division multiplexing device 501 through the third port 230. The 2nd first three-port wavelength division multiplexing device 501 receives the uplink optical signal in the wavelength n1 through the first input 2013, and further receives the uplink optical signal in the wavelength n2 through the fourth port 240. The 2nd first three-port wavelength division multiplexing device 501 allows the uplink optical signal in the wavelength n1 to be reflected and allows the uplink optical signal in the wavelength n2 to be transmitted. Thus, the 2nd first three-port wavelength division multiplexing device 501 transmits the uplink optical signal in the wavelength n1 and the uplink optical signal in the wavelength n2 to the first input 2013 of the 3rd first three-port wavelength division multiplexing device 501 through the third port 230. The 3rd first three-port wavelength division multiplexing device 501 receives the uplink optical signal in the wavelength n1 and the uplink optical signal in the wavelength n2 through the first input 2013, and further receives the uplink optical signal in the wavelength n3 through the fourth port 240. The 3rd first three-port wavelength division multiplexing device 501 allows the uplink optical signals in the wavelengths n1 and n2 to be reflected and allows the uplink optical signal in the wavelength n3 to be transmitted. Thus, the 3rd first three-port wavelength division multiplexing device 501 transmits all the uplink optical signals in the wavelengths n1, n2, and n3 to the first input 2013 of the 4th first three-port wavelength division multiplexing device 501 through the third port 230.

In this way, the second wavelength division multiplexing component 212 aggregates the plurality of uplink optical signals in different wavelengths into one uplink coupled optical signal, then transmits the uplink coupled optical signal to the connection port 203 through the third port 230 of the last first three-port wavelength division multiplexing device 501 from left to right, and transmits the uplink coupled optical signal to the core optical module 101 through the connection port 203.

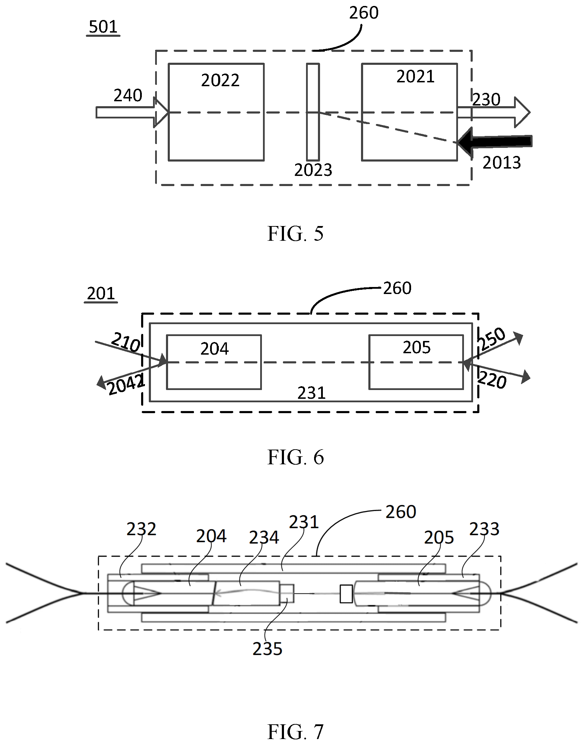

Still referring to FIG. 5, the first three-port wavelength division multiplexing device 501 may include a first component 260: including a dual-fiber collimator 2021, a single-fiber collimator 2022, and a first thin film filter 2023. The fourth port 240 is arranged on the single-fiber collimator 2022, the third port 230 and the first input 2013 are arranged on the dual-fiber collimator 2021, the first thin film filter 2023 is arranged on a collimating lens of the dual-fiber collimator 2021, the first thin film filter 2023 allows light of some wavelengths to be transmitted and allows light of some other wavelengths to be reflected, and transmission wavelengths of the first thin film filters 2023 of the first three-port wavelength division multiplexing devices 501 are different, so that a plurality of optical signals in different wavelengths are transmitted between a plurality of first three-port wavelength division multiplexing devices 501 and are ultimately aggregated into one uplink coupled optical signal.

Referring to FIG. 6 and FIG. 7, the first four-port wavelength division multiplexing device 201 may include a first component 260: including a first reflecting component 204 and a second reflecting component 205. The first reflecting component 204 includes a first dual optical fiber: including a first optical fiber and a second optical fiber. The second reflecting component 205 includes a second dual optical fiber: including a third optical fiber and a fourth optical fiber. The first optical fiber and the third optical fiber each include a common port. To be specific, the first optical fiber includes the first port 210, and the third optical fiber includes the second port 220. The second optical fiber and the fourth optical fiber each include a reflection port. To be specific, the second optical fiber includes the second reflecting output 2042, and the fourth optical fiber includes the first reflecting output 250. The reflection port may refer to a port through which an optical signal is reflected.

The first four-port wavelength division multiplexing device 201 further includes a first glass tube 231, and the first glass tube 231 is configured to connect the first reflecting component 204 and the second reflecting component 205. The first four-port wavelength division multiplexing device 201 further includes a second glass tube 232 arranged in the first glass tube 231 in a nested manner. The second glass tube 232 is in clearance fit with the first glass tube 231, that is, there is a specific clearance between the second glass tube 232 and the first glass tube 231, and the first reflecting component 204 is sleeved in the second glass tube 232. The first four-port wavelength division multiplexing device 201 further includes a third glass tube 233 arranged in the first glass tube 231 in a nested manner. The third glass tube 233 is in clearance fit with the first glass tube 231, that is, there is a specific clearance between the second glass tube 232 and the first glass tube 231, and the second reflecting component 205 is sleeved in the third glass tube 233.

The first reflecting component 204 further includes a first focusing lens 234 and a first WDM filter 235. The first focusing lens 234 is arranged at an end portion of the first dual optical fiber, and the first WDM filter 235 may be arranged on the first focusing lens 234 through adhesion. The first focusing lens 234 is configured to focus light to achieve concentration of the light. When optical signals in different wavelengths are transmitted simultaneously, the first WDM filter 235 allows transmission of optical signals in some wavelengths to pass through and simultaneously prevents transmission of optical signals in some other wavelengths, thereby achieving functions of the first reflecting component 204 for transmitting and reflecting optical signals in different wavelengths.

Similarly, the second reflecting component 205 also includes a second focusing lens and a second WDM filter. The second focusing lens is arranged at an end portion of the second dual optical fiber, and the second WDM filter may be arranged on the second focusing lens through adhesion.

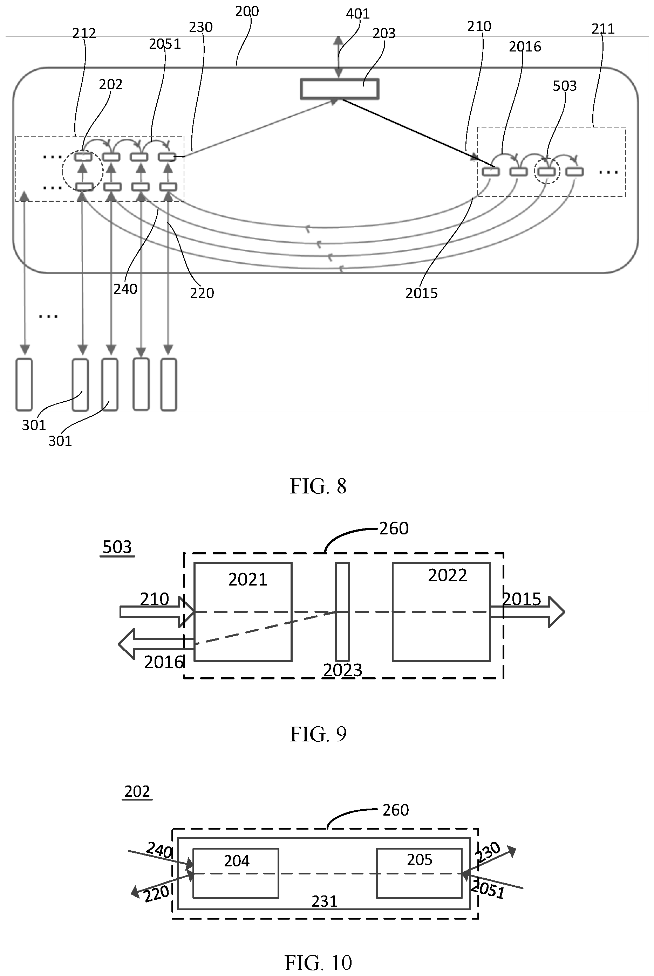

Referring to FIG. 8, FIG. 9, and FIG. 10, in an embodiment of this application, the first wavelength division multiplexing component 211 may include a plurality of third three-port wavelength division multiplexing devices 503, and the second wavelength division multiplexing component 212 may include a plurality of second four-port wavelength division multiplexing devices 202.

The third three-port wavelength division multiplexing device 503 includes: a first port 210, a third reflecting output 2016, and a first output 2015.

The second four-port wavelength division multiplexing device 202 includes: a fourth port 240, a third port 230, a second port 220, and a third input 2051.

In the first wavelength division multiplexing component 211, the first port 210 of one third three-port wavelength division multiplexing device 503 is connected to the connection port 203, and in the remaining third three-port wavelength division multiplexing devices 503, the first port 210 of one of two adjacent third three-port wavelength division multiplexing devices 503 is connected to the third reflecting output 2016 of the other third three-port wavelength division multiplexing device 503, so that the plurality of third three-port wavelength division multiplexing devices 503 are connected in series. The first output 2015 of each third three-port wavelength division multiplexing device 503 is connected to the fourth port 240 of one corresponding second four-port wavelength division multiplexing device 202, so that the plurality of third three-port wavelength division multiplexing devices 503 and the plurality of second four-port wavelength division multiplexing devices 202 are correspondingly connected.

In the second wavelength division multiplexing component 212, from left to right, the third port 230 of the last second four-port wavelength division multiplexing device 202 is connected to the connection port 203, and in the remaining second four-port wavelength division multiplexing devices 202, the third port 230 of one of two adjacent second four-port wavelength division multiplexing devices 202 is connected to the third input 2051 of the other second four-port wavelength division multiplexing device 202, so that the plurality of second four-port wavelength division multiplexing devices 202 are connected in series. The second port 220 of each second four-port wavelength division multiplexing device 202 is connected to one corresponding bidirectional access optical module 301 through the first single-core optical fiber 402.

A transmission path for a plurality of downlink coupled optical signals in different wavelengths that are combined into one signal includes the following processes.

The plurality of downlink coupled optical signals in different wavelengths that are combined into one signal are transmitted to the first port 210 of the 1st third three-port wavelength division multiplexing device 503 in the first wavelength division multiplexing component 211 through the connection port 203. The 1st third three-port wavelength division multiplexing device 503 allows a downlink optical signal in a wavelength λ1 to be transmitted and allows downlink optical signals in other wavelengths to be reflected. Therefore, the 1st third three-port wavelength division multiplexing device 503 transmits the downlink optical signal in the wavelength λ1 out of this third three-port wavelength division multiplexing device 503 through the first output 2015 and outputs this downlink optical signal to the corresponding 1st second four-port wavelength division multiplexing device 202. The 1st second four-port wavelength division multiplexing device 202 receives the downlink optical signal in the wavelength λ1 through the fourth port 240, and the 1st second four-port wavelength division multiplexing device 202 allows the downlink optical signal in the wavelength λ1 to be reflected. Thus, the 1st second four-port wavelength division multiplexing device 202 reflects the downlink optical signal in the wavelength λ1 out of this second four-port wavelength division multiplexing device 202 through the second port 220 and outputs this downlink optical signal to the corresponding first bidirectional access optical module 301. In addition, the 1st third three-port wavelength division multiplexing device 503 further reflects the downlink optical signals in wavelengths other than λ1 to the 2nd third three-port wavelength division multiplexing device 503 through the third reflecting output 2016.

The 2nd third three-port wavelength division multiplexing device 503 allows a downlink optical signal in a wavelength λ2 to be transmitted and allows downlink optical signals in other wavelengths to be reflected. Thus, the 2nd third three-port wavelength division multiplexing device 503 transmits the downlink optical signal in the wavelength λ2 out of this third three-port wavelength division multiplexing device 503 through the first output 2015 and outputs this downlink optical signal to the corresponding 2nd second four-port wavelength division multiplexing device 202. The 2nd second four-port wavelength division multiplexing device 202 receives the downlink optical signal in the wavelength λ2 through the fourth port 240, and the 2nd second four-port wavelength division multiplexing device 202 allows the downlink optical signal in the wavelength λ2 to be reflected. Thus, the 2nd second four-port wavelength division multiplexing device 202 reflects the downlink optical signal in the wavelength λ2 out of this second four-port wavelength division multiplexing device 202 through the second port 220 and outputs this downlink optical signal to the corresponding second bidirectional access optical module 301.

In this way, the first wavelength division multiplexing component 211 splits one downlink coupled optical signal that is formed by combination into a plurality of downlink optical signals in different wavelengths, and transmits the plurality of downlink optical signals to a plurality of corresponding bidirectional access optical modules 301 through a plurality of second ports 220 of the second wavelength division multiplexing component 212.

A transmission path for a plurality of uplink optical signals in different wavelengths includes the following processes.

A plurality of uplink optical signals in different wavelengths are transmitted to corresponding second four-port wavelength division multiplexing devices 202 in the second wavelength division multiplexing component 212 through corresponding second ports 220 respectively. Each second four-port wavelength division multiplexing device 202 allows an uplink optical signal in a corresponding wavelength to enter, so that the plurality of uplink optical signals in different wavelengths are inputted to the second wavelength division multiplexing component 212 through the plurality of second ports 220 respectively.

In the second wavelength division multiplexing component 212, a plurality of second ports 220 of the plurality of second four-port wavelength division multiplexing devices 202 arranged in sequence from left to right are configured to receive uplink optical signals in wavelengths n1, n2, n3, ..., and the like.

From left to right, the 1st second four-port wavelength division multiplexing device 202 allows the uplink optical signal in the wavelength n1 to enter and transmits the uplink optical signal in the wavelength n1 to the third input 2051 of the 2nd second four-port wavelength division multiplexing device 202 through the third port 230. The 2nd second four-port wavelength division multiplexing device 202 receives the uplink optical signal in the wavelength n1 through the third input 2051 and further receives the uplink optical signal in the wavelength n2 through the second port 220. The 2nd second four-port wavelength division multiplexing device 202 allows the uplink optical signal in the wavelength n2 to enter and transmits the uplink optical signals in the wavelengths n1 and n2 to the third input 2051 of the 3rd second four-port wavelength division multiplexing device 202 through the third port 230. The 3rd second four-port wavelength division multiplexing device 202 receives the uplink optical signals in the wavelengths n1 and n2 through the third input 2051 and further receives the uplink optical signal in the wavelength n3 through the second port 220. The 3rd second four-port wavelength division multiplexing device 202 allows the uplink optical signal in the wavelength n3 to enter and transmits the uplink optical signals in the wavelengths n1, n2, and n3 to the third input 2051 of the 4th second four-port wavelength division multiplexing device 202 through the third port 230.

In this way, the second wavelength division multiplexing component 212 ultimately aggregates the plurality of uplink optical signals in different wavelengths into one uplink coupled optical signal, then transmits the uplink coupled optical signal to the connection port 203 through the third port 230 of the last second four-port wavelength division multiplexing device 202 from left to right, and transmits the uplink coupled optical signal to the core optical module 101 through the connection port 203.

Still referring to FIG. 9, the third three-port wavelength division multiplexing device 503 may include a first component 260: including a dual-fiber collimator 2021, a single-fiber collimator 2022, and a first thin film filter 2023. The first output 2015 is arranged on the single-fiber collimator 2022, the first port 210 and the third reflecting output 2016 are arranged on the dual-fiber collimator 2021, the first thin film filter 2023 is arranged on a collimating lens of the dual-fiber collimator 2021, the first thin film filter 2023 allows light of some wavelengths to be transmitted and allows light of some other wavelengths to be reflected, and transmission wavelengths of the first thin film filters 2023 of the third three-port wavelength division multiplexing devices 503 are different, so that the downlink coupled optical signal is split into a plurality of optical signals in different wavelengths and then transmitted between the plurality of third three-port wavelength division multiplexing devices 503.

Referring to FIG. 10, the second four-port wavelength division multiplexing device 202 may include a first component 260: including a first reflecting component 204 and a second reflecting component 205. The first reflecting component 204 includes a first dual optical fiber: including a first optical fiber and a second optical fiber. The second reflecting component 205 includes a second dual optical fiber: including a third optical fiber and a fourth optical fiber. The first optical fiber and the third optical fiber each include a reflection port. To be specific, the first optical fiber includes the fourth port 240, and the third optical fiber includes the third input 2051. The second optical fiber and the fourth optical fiber each include a common port, where the second optical fiber includes the second port 220, and the fourth optical fiber includes the third port 230.

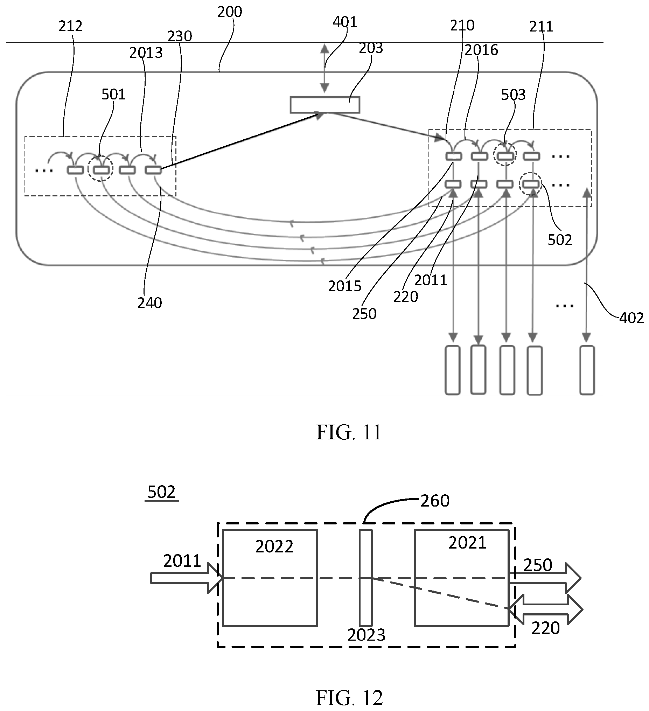

Referring to FIG. 11 and FIG. 12, in an embodiment of this application, the first wavelength division multiplexing component 211 may include a plurality of second three-port wavelength division multiplexing devices 502 and a plurality of third three-port wavelength division multiplexing devices 503, and the second wavelength division multiplexing component 212 may include a plurality of first three-port wavelength division multiplexing devices 501.

The third three-port wavelength division multiplexing device 503 includes: a first port 210, a third reflecting output 2016, and a first output 2015.

The second three-port wavelength division multiplexing device 502 includes: a second port 220, a first reflecting output 250, and a second input 2011.

The first three-port wavelength division multiplexing device 501 includes: a fourth port 240, a third port 230, and a first input 2013.

In the first wavelength division multiplexing component 211, the first port 210 of one third three-port wavelength division multiplexing device 503 is connected to the connection port 203, and in the remaining third three-port wavelength division multiplexing devices 503, the first port 210 of one of two adjacent third three-port wavelength division multiplexing devices 503 is connected to the third reflecting output 2016 of the other third three-port wavelength division multiplexing device 503, so that the plurality of third three-port wavelength division multiplexing devices 503 are connected in series.

The first output 2015 of each third three-port wavelength division multiplexing device 503 is connected to the second input 2011 of one corresponding second three-port wavelength division multiplexing device 502, so that the plurality of second three-port wavelength division multiplexing devices 502 and the plurality of third three-port wavelength division multiplexing devices 503 are correspondingly connected.

In the first wavelength division multiplexing component 211, the second port 220 of each second three-port wavelength division multiplexing device 502 is connected to one corresponding bidirectional access optical module 301, and the first reflecting output 250 of each second three-port wavelength division multiplexing device 502 is correspondingly connected to one first three-port wavelength division multiplexing device 501 in the second wavelength division multiplexing component 212.

In the second wavelength division multiplexing component 212, from left to right, the third port 230 of the last first three-port wavelength division multiplexing device 501 is connected to the connection port 203, and in the remaining first three-port wavelength division multiplexing devices 501, the third port 230 of one of two adjacent first three-port wavelength division multiplexing devices 501 is connected to the first input 2013 of the other first three-port wavelength division multiplexing device 501, so that the plurality of first three-port wavelength division multiplexing devices 501 are connected in series.

A transmission path for a plurality of downlink coupled optical signals in different wavelengths that are combined into one signal includes the following processes.

The plurality of downlink coupled optical signals in different wavelengths that are combined into one signal are transmitted to the first port 210 of the 1st third three-port wavelength division multiplexing device 503 through the connection port 203. The 1st third three-port wavelength division multiplexing device 503 allows a downlink optical signal in a wavelength λ1 to be transmitted and allows downlink optical signals in other wavelengths to be reflected. Thus, the 1st third three-port wavelength division multiplexing device 503 transmits the downlink optical signal in the wavelength λ1 out of this third three-port wavelength division multiplexing device 503 through the first output 2015 and outputs this downlink optical signal to the corresponding 1st second three-port wavelength division multiplexing device 502. The 1st second three-port wavelength division multiplexing device 502 receives the downlink optical signal in the wavelength λ1 through the second input 2011, and the 1st second three-port wavelength division multiplexing device 502 allows the downlink optical signal in the wavelength λ1 to be transmitted and allows downlink optical signals in other wavelengths to be reflected. Thus, the 1st second three-port wavelength division multiplexing device 502 transmits the downlink optical signal in the wavelength λ1 out of this second three-port wavelength division multiplexing device 502 through the second port 220 and outputs this downlink optical signal to the corresponding first bidirectional access optical module 301. The 1st third three-port wavelength division multiplexing device 503 further reflects the downlink optical signals in wavelengths other than λ1 to the 2nd third three-port wavelength division multiplexing device 503 through the third reflecting output 2016.

The 2nd third three-port wavelength division multiplexing device 503 allows a downlink optical signal in a wavelength λ2 to be transmitted and allows downlink optical signals in other wavelengths to be reflected. Thus, the 2nd third three-port wavelength division multiplexing device 503 transmits the downlink optical signal in the wavelength λ2 out of this third three-port wavelength division multiplexing device 503 through the first output 2015 and outputs this downlink optical signal to the corresponding 2nd second three-port wavelength division multiplexing device 502. The 2nd second three-port wavelength division multiplexing device 502 receives the downlink optical signal in the wavelength λ2 through the second input 2011, and the 2nd second three-port wavelength division multiplexing device 502 allows the downlink optical signal in the wavelength λ2 to be transmitted and allows downlink optical signals in other wavelengths to be reflected. Thus, the 2nd second three-port wavelength division multiplexing device 502 transmits the downlink optical signal in the wavelength λ2 out of this second three-port wavelength division multiplexing device 502 through the second port 220 and outputs this downlink optical signal to the corresponding second bidirectional access optical module 301. The 2nd third three-port wavelength division multiplexing device 503 further reflects the downlink optical signals in other wavelengths to the 3rd third three-port wavelength division multiplexing device 503 through the third reflecting output 2016.

In this way, the first wavelength division multiplexing component 211 splits one downlink coupled optical signal that is formed by combination into a plurality of downlink optical signals in different wavelengths, and then transmits the plurality of downlink optical signals to a plurality of corresponding bidirectional access optical modules 301 through the plurality of second ports 220.

A transmission path for a plurality of uplink optical signals in different wavelengths includes the following processes.

A plurality of uplink optical signals in different wavelengths are transmitted to corresponding second three-port wavelength division multiplexing devices 502 in the first wavelength division multiplexing component 211 through corresponding second ports 220 respectively. Each second three-port wavelength division multiplexing device 502 allows the uplink optical signals to be reflected, so that the plurality of uplink optical signals in different wavelengths are reflected to a plurality of first three-port wavelength division multiplexing devices 501 in the second wavelength division multiplexing component 212 through the plurality of first reflecting outputs 250 respectively.

In the second wavelength division multiplexing component 212, a plurality of fourth ports 240 of the plurality of first three-port wavelength division multiplexing devices 501 arranged in sequence from left to right are configured to receive uplink optical signals in wavelengths n1, n2, n3, ..., and the like.

From left to right, the 1st first three-port wavelength division multiplexing device 501 allows the uplink optical signal in the wavelength n1 to be transmitted and transmits the uplink optical signal in the wavelength n1 to the first input 2013 of the 2nd first three-port wavelength division multiplexing device 501 through the third port 230. The 2nd first three-port wavelength division multiplexing device 501 receives the uplink optical signal in the wavelength n1 through the first input 2013, and simultaneously receives the uplink optical signal in the wavelength n2 through the fourth port 240. The 2nd first three-port wavelength division multiplexing device 501 allows the uplink optical signal in the wavelength n1 to be reflected and allows the uplink optical signal in the wavelength n2 to be transmitted. Thus, the 2nd first three-port wavelength division multiplexing device 501 transmits the uplink optical signal in the wavelength n1 and the uplink optical signal in the wavelength n2 to the first input 2013 of the 3rd first three-port wavelength division multiplexing device 501 through the third port 230. The 3rd first three-port wavelength division multiplexing device 501 receives the uplink optical signals in the wavelengths n1 and n2 through the first input 2013, and simultaneously receives the uplink optical signal in the wavelength n3 through the fourth port 240. The 3rd first three-port wavelength division multiplexing device 501 allows the uplink optical signals in the wavelengths n1 and n2 to be reflected and allows the uplink optical signal in the wavelength n3 to be transmitted. Thus, the 3rd first three-port wavelength division multiplexing device 501 transmits all the uplink optical signals in the wavelengths n1, n2, and n3 to the first input 2013 of the 4th first three-port wavelength division multiplexing device 501 through the third port 230.

In this way, the second wavelength division multiplexing component 212 ultimately aggregates the plurality of uplink optical signals in different wavelengths into one uplink coupled optical signal, then transmits the uplink coupled optical signal to the connection port 203 through the third port 230 of the last first three-port wavelength division multiplexing device 501 from left to right, and transmits the uplink coupled optical signal to the core optical module 101 through the connection port 203.

Still referring to FIG. 12, the second three-port wavelength division multiplexing device 502 includes a first component 260: including a dual-fiber collimator 2021, a single-fiber collimator 2022, and a first thin film filter 2023. The second input 2011 is arranged on the single-fiber collimator 2022, the first reflecting output 250 and the second port 220 are arranged on the dual-fiber collimator 2021, the first thin film filter 2023 is arranged on a collimating lens of the dual-fiber collimator 2021, the first thin film filter 2023 allows light of some wavelengths to be transmitted and allows light of some other wavelengths to be reflected, and transmission wavelengths of the first thin film filters 2023 of the second three-port wavelength division multiplexing devices 502 are different, so that a plurality of optical signals in different wavelengths are transmitted between the plurality of second three-port wavelength division multiplexing devices 502.

The third three-port wavelength division multiplexing device 503 may also include a first component 260: including a dual-fiber collimator, a single-fiber collimator, and a first thin film filter component.

The first components in the plurality of second three-port wavelength division multiplexing devices 502 cooperate with the first components in the plurality of third three-port wavelength division multiplexing devices 503, to split the downlink coupled optical signal into a plurality of downlink optical signals in different wavelengths.

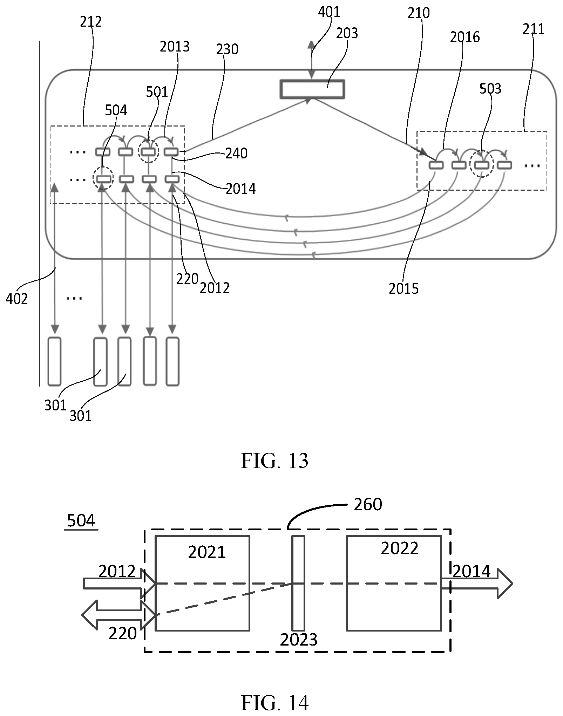

Similarly, the first three-port wavelength division multiplexing device 501 may include a first component 260: including a dual-fiber collimator, a single-fiber collimator, and a first thin film filter component. The first components of the plurality of first three-port wavelength division multiplexing devices 501 cooperate to aggregate a plurality of uplink optical signals in different wavelengths into an uplink coupled optical signal. Referring to FIG. 13 and FIG. 14, in an embodiment of this application, the first wavelength division multiplexing component 211 may include a plurality of third three-port wavelength division multiplexing devices 503, and the second wavelength division multiplexing component 212 may include a plurality of first three-port wavelength division multiplexing devices 501 and a plurality of fourth three-port wavelength division multiplexing devices 504.

The first three-port wavelength division multiplexing device 501 includes: a fourth port 240, a third port 230, and a first input 2013.

The third three-port wavelength division multiplexing device 503 includes: a first port 210, a third reflecting output 2016, and a first output 2015.

The fourth three-port wavelength division multiplexing device 504 includes: a second port 220, a second output 2014, and a fourth input 2012.

In the first wavelength division multiplexing component 211, the first port 210 of one third three-port wavelength division multiplexing device 503 is connected to the connection port 203, and in the remaining third three-port wavelength division multiplexing devices 503, the first port 210 of one of two adjacent third three-port wavelength division multiplexing devices 503 is connected to the third reflecting output 2016 of the other third three-port wavelength division multiplexing device 503, so that the plurality of third three-port wavelength division multiplexing devices 503 are connected in series. The first output 2015 of each third three-port wavelength division multiplexing device 503 is connected to the fourth input 2012 of one corresponding fourth three-port wavelength division multiplexing device 504 in the second wavelength division multiplexing component 212, so that the plurality of third three-port wavelength division multiplexing devices 503 and the plurality of fourth three-port wavelength division multiplexing devices 504 are correspondingly connected.

In the second wavelength division multiplexing component 212, the second port 220 of each fourth three-port wavelength division multiplexing device 504 is connected to one corresponding bidirectional access optical module 301, and the second output 2014 of each fourth three-port wavelength division multiplexing device 504 is connected to the fourth port 240 of one corresponding first three-port wavelength division multiplexing device 501. In the second wavelength division multiplexing component 212, the third port 230 of the last first three-port wavelength division multiplexing device 501 from left to right is connected to the connection port 203, and in the remaining first three-port wavelength division multiplexing devices 501, the third port 230 of one of two adjacent first three-port wavelength division multiplexing devices 501 is connected to the first input 2013 of the other first three-port wavelength division multiplexing device 501, so that the plurality of first three-port wavelength division multiplexing devices 501 are connected in series.

A transmission path for a plurality of downlink coupled optical signals in different wavelengths that are combined into one signal includes the following processes.

The plurality of downlink coupled optical signals in different wavelengths that are combined into one signal are transmitted to the first port 210 of the 1st third three-port wavelength division multiplexing device 503 in the first wavelength division multiplexing component 211 through the connection port 203. The 1st third three-port wavelength division multiplexing device 503 allows a downlink optical signal in a wavelength λ1 to be transmitted and allows downlink optical signals in other wavelengths to be reflected. Thus, the 1st third three-port wavelength division multiplexing device 503 transmits the downlink optical signal in the wavelength λ1 out of this third three-port wavelength division multiplexing device 503 through the first output 2015 and outputs this downlink optical signal to one corresponding fourth three-port wavelength division multiplexing device 504. The 1st fourth three-port wavelength division multiplexing device 504 receives the downlink optical signal in the wavelength λ1 through the fourth input 2012, and the 1st fourth three-port wavelength division multiplexing device 504 allows the downlink optical signal in the wavelength λ1 to be reflected. Thus, the 1st fourth three-port wavelength division multiplexing device 504 reflects the downlink optical signal in the wavelength λ1 out of this fourth three-port wavelength division multiplexing device 504 through the second port 220 and outputs this downlink optical signal to the corresponding first bidirectional access optical module 301.

The 1st third three-port wavelength division multiplexing device 503 further reflects the downlink optical signals in wavelengths other than λ1 to the 2nd third three-port wavelength division multiplexing device 503 through the third reflecting output 2016. The 2nd third three-port wavelength division multiplexing device 503 allows the downlink optical signal in a wavelength λ2 to be transmitted and allows downlink optical signals in other wavelengths to be reflected. Thus, the 2nd third three-port wavelength division multiplexing device 503 transmits the downlink optical signal in the wavelength λ2 out of this third three-port wavelength division multiplexing device 503 through the first output 2015 and outputs this downlink optical signal to the corresponding 2nd fourth three-port wavelength division multiplexing device 504. The 2nd fourth three-port wavelength division multiplexing device 504 receives the downlink optical signal in the wavelength λ2 through the fourth input 2012, and the 2nd fourth three-port wavelength division multiplexing device 504 allows the downlink optical signal in the wavelength λ2 to be reflected. Thus, the 2nd fourth three-port wavelength division multiplexing device 504 reflects the downlink optical signal in the wavelength λ2 out of this fourth three-port wavelength division multiplexing device 504 through the second port 220 and outputs this downlink optical signal to the corresponding second bidirectional access optical module 301.

In this way, the first wavelength division multiplexing component 211 ultimately splits one downlink coupled optical signal that is formed by combination into a plurality of downlink optical signals in different wavelengths, and transmits the downlink optical signals to a plurality of corresponding bidirectional access optical modules 301 through the second port 220 of the second wavelength division multiplexing component 212.

A transmission path for a plurality of uplink optical signals in different wavelengths includes the following processes.

A plurality of uplink optical signals in different wavelengths are transmitted to corresponding fourth three-port wavelength division multiplexing devices 504 in the second wavelength division multiplexing component 212 through corresponding second ports 220 respectively. Each fourth three-port wavelength division multiplexing device 504 allows uplink optical signals in corresponding wavelengths to enter, so that the plurality of uplink optical signals in different wavelengths are inputted to the second wavelength division multiplexing component 212 through the plurality of second ports 220 respectively.

In the second wavelength division multiplexing component 212, a plurality of second ports 220 of the plurality of fourth three-port wavelength division multiplexing devices 504 arranged in sequence from left to right are configured to receive uplink optical signals in wavelengths n1, n2, n3, ..., and the like. From left to right, the 1st fourth three-port wavelength division multiplexing device 504 allows the uplink optical signal in the wavelength n1 to enter and transmits the uplink optical signal in the wavelength n1 to the fourth port 240 of the 1st first three-port wavelength division multiplexing device 501 through the second output 2014. The first three-port wavelength division multiplexing device 501 allows the uplink optical signal in the wavelength n1 to enter and transmits the uplink optical signal in the wavelength n1 to the first input 2013 of the 2nd first three-port wavelength division multiplexing device 501 through the third port 230.

In addition, the 2nd fourth three-port wavelength division multiplexing device 504 further receives the uplink optical signal in the wavelength n2 through the second port 220. The 2nd fourth three-port wavelength division multiplexing device 504 allows the uplink optical signal in the wavelength n2 to enter and transmits the uplink optical signal in the wavelength n2 to the fourth port 240 of the 2nd first three-port wavelength division multiplexing device 501 through the second output 2014. To be specific, the 2nd first three-port wavelength division multiplexing device 501 receives the uplink optical signal in the wavelength n1 and the uplink optical signal in the wavelength n2, and the 2nd first three-port wavelength division multiplexing device 501 allows the uplink optical signal in the wavelength n1 to be reflected and transmits the uplink optical signals in the wavelengths n1 and n2 to the first input 2013 of the 3rd first three-port wavelength division multiplexing device 501 through the third port 230.

In this way, the second wavelength division multiplexing component 212 aggregates the plurality of uplink optical signals in different wavelengths into one uplink coupled optical signal, then transmits the uplink coupled optical signal to the connection port 203 through the third port 230 of the last first three-port wavelength division multiplexing device 501 from left to right, and transmits the uplink coupled optical signal to the core optical module 101 through the connection port 203.

Still referring to FIG. 14, the fourth three-port wavelength division multiplexing device 504 includes a first component 260: including a dual-fiber collimator 2021, a single-fiber collimator 2022, and a first thin film filter 2023. The second output 2014 is arranged on the single-fiber collimator 2022, the fourth input 2012 and the second port 220 are arranged on the dual-fiber collimator 2021, the first thin film filter 2023 is arranged on a collimating lens of the dual-fiber collimator 2021, the first thin film filter 2023 allows light of some wavelengths to be transmitted and allows light of some other wavelengths to be reflected, and transmission wavelengths of the first thin film filters 2023 of the fourth three-port wavelength division multiplexing devices 504 are different, so that a plurality of optical signals in different wavelengths are transmitted between the plurality of fourth three-port wavelength division multiplexing devices 504.

Similarly, the first three-port wavelength division multiplexing device 501 may also include a first component 260: including a dual-fiber collimator, a single-fiber collimator, and a first thin film filter component.

The first components in the plurality of fourth three-port wavelength division multiplexing devices 504 cooperate with the first components in the plurality of first three-port wavelength division multiplexing devices 501 to aggregate a plurality of uplink optical signals in different wavelengths into an uplink coupled optical signal.

The third three-port wavelength division multiplexing device 503 may include a first component 260: including a dual-fiber collimator, a single-fiber collimator, and a first thin film filter component. The first components in the plurality of third three-port wavelength division multiplexing devices 503 cooperate to split the downlink coupled optical signal into a plurality of downlink optical signals in different wavelengths.

The bidirectional access optical module 301 may be a bidirectional (BIDI) optical module. BIDI is a single-fiber bidirectional optical module that uses a filter therein for filtering and simultaneously completes sending of an optical signal in one wavelength and reception of an optical signal in another wavelength. To achieve bidirectional communication, another end is required to complete reception of an optical signal in one wavelength and sending of an optical signal in another wavelength. For example, when an end sends an optical signal in 1310 nm and receives an optical signal in 1550 nm, the other end should be applicable to an opposite case, that is, sending an optical signal in 1550 nm and receiving an optical signal in 1310 nm.

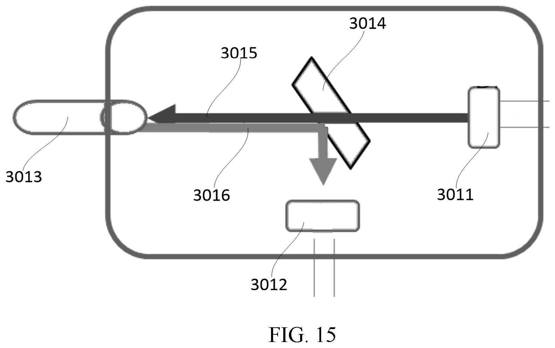

Referring to FIG. 15, in an embodiment of this application, the bidirectional access optical module 301 includes a second thin film filter 3014. On an optical path for an uplink optical signal 3016 and a downlink optical signal 3015, the second thin film filter 3014 may be arranged at an inclination angle of 0 degrees to 45 degrees.

A downlink optical signal input 3011 of the bidirectional access optical module 301 is configured to input the downlink optical signal 3015. The downlink optical signal 3015 reaches a sending end 3013 of the bidirectional access optical module 301 after being transmitted through the second thin film filter 3014.

The sending end 3013 of the bidirectional access optical module 301 is configured to send the uplink optical signal 3016. When the uplink optical signal 3016 passes through the second thin film filter 3014, since the second thin film filter 3014 is arranged at an inclination angle of 0 degrees to 45 degrees, the second thin film filter 3014 can change the optical path for the uplink optical signal 3016, so that the uplink optical signal 3016 is outputted from an uplink optical signal output 3012 of the bidirectional access optical module 301 after being reflected by the second thin film filter 3014.

That is, the second thin film filter 3014 arranged at an inclination angle of 0 degrees to 45 degrees can achieve separation of optical signals in two different wavelengths in an uplink direction and a downlink direction.

In this embodiment of this application, the aggregation device 200 may be a thin film filter type WDM (Thin Film Filter Type WDM) device or an array waveguide grating type WDM (AGW).

The embodiments or implementations in this specification are described in a progressive manner. All embodiments focus on the differences from other embodiments, and the same or similar parts between the embodiments may refer to each other.

It should be pointed out that the embodiments indicated by "one embodiment", "an embodiment", "exemplary embodiment", "some embodiments", and the like mentioned in the specification may include specific features, structures, or characteristics, but not all embodiments necessarily include the specific features, structures, or characteristics. In addition, such phrases do not necessarily refer to the same embodiment. In addition, when describing specific features, structures, or characteristics in combination with embodiments, implementing such features, structures, or characteristics in combination with other embodiments that are explicitly or implicitly described is within the knowledge scope of those skilled in the art.

In general, the terms should be understood at least in part by their use in context, for example, at least in part based on context. The term "one or more" used herein may be used to describe any feature, structure, or characteristic in the singular sense, or may be used to describe a combination of features, structures, or characteristics in the plural sense. Similarly, terms such as "a" or " " may alternatively be understood as conveying the singular usage or conveying the plural usage, at least in part based on context.

It should be readily understood that the terms "on...", "above...", and "over..." in this disclosure should be interpreted in the broadest sense, so that the "on..." not only means "directly on something", but also includes a meaning of "on something" with an intermediate feature or layer therebetween, and "above..." or "over..." not only includes a meaning of "above something " or "over something ", but may also include a meaning of "above something " or "over something" with no intermediate feature or layer therebetween (that is, directly on something).

In conclusion, it should be noted that: the above embodiments are only used to illustrate the technical solutions of this application rather than to limit them. Although this application has been described in detail with reference to the foregoing embodiments, those of ordinary skill in the art should understand that: they can still modify the technical solutions recorded in the foregoing embodiments, or equivalently replace some or all of the technical features therein; and these modifications or replacements do not make the essence of the corresponding technical solutions depart from the scope of the technical solutions of the embodiments of this application.

## Claims

1. An aggregation device, arranged in an aggregation layer of a communication network, and comprising:
a first port, configured to receive a downlink coupled optical signal outputted by a core optical module, wherein the first port is configured to be connected to the core optical module, and the core optical module is arranged in a core layer of the communication network;
a plurality of first components, configured to split the downlink coupled optical signal from the first port to form a plurality of downlink optical signals when operating in a downlink optical signal transmission link, aggregate a plurality of received uplink optical signals into one uplink coupled optical signal when operating in an uplink optical signal transmission link, and output the uplink coupled optical signal to a third port;
the plurality of second ports, configured to receive the plurality of downlink optical signals from the plurality of first components, and output the plurality of downlink optical signals to corresponding bidirectional access optical modules among a plurality of bidirectional access optical modules respectively, wherein the plurality of second ports are further configured to receive a plurality of uplink optical signals in different wavelengths from the plurality of bidirectional access optical modules and output the plurality of uplink optical signals to the plurality of first components, the plurality of second ports are configured to be correspondingly connected to the plurality of bidirectional access optical modules through a plurality of first single-core optical fibers, and the plurality of bidirectional access optical modules are arranged in an access layer of the communication network; and
the third port, configured to output the uplink coupled optical signal to the core optical module.

2. The aggregation device according to claim 1, wherein the aggregation device comprises:
a first wavelength division multiplexing component, comprising:
the first port;
the plurality of first components;
the plurality of second ports; and
a plurality of first reflecting outputs, configured to reflect the plurality of uplink optical signals to a plurality of corresponding fourth ports respectively, wherein the plurality of first reflecting outputs are correspondingly connected to the plurality of fourth ports in a second wavelength division multiplexing component; and
the second wavelength division multiplexing component, comprising:
the third port;
the plurality of first components; and
the plurality of fourth ports, configured to receive the plurality of uplink optical signals, and send the plurality of uplink optical signals to the plurality of first components.

3. The aggregation device according to claim 2, wherein
the first wavelength division multiplexing component comprises a plurality of first four-port wavelength division multiplexing devices, and each of the first four-port wavelength division multiplexing devices comprises the first port, the first component, the second port, the first reflecting output, and a second reflecting output; wherein in the first wavelength division multiplexing component, the first port of one of the first four-port wavelength division multiplexing devices is connected to the core optical module, and in the remaining first four-port wavelength division multiplexing devices, the first port of one of two adjacent first four-port wavelength division multiplexing devices is connected to the second reflecting output of the other first four-port wavelength division multiplexing device, so that the plurality of first four-port wavelength division multiplexing devices are connected in series; and the second port of each of the first four-port wavelength division multiplexing devices is correspondingly connected to one of the bidirectional access optical modules; and
the second wavelength division multiplexing component comprises a plurality of first three-port wavelength division multiplexing devices, and each of the first three-port wavelength division multiplexing devices comprises the third port, the first component, the fourth port, and a first input; wherein in the second wavelength division multiplexing component, the third port of one of the first three-port wavelength division multiplexing devices is connected to the core optical module, and in the remaining first three-port wavelength division multiplexing devices, the first input of one of two adjacent first three-port wavelength division multiplexing devices is connected to the third port of the other first three-port wavelength division multiplexing device, so that the plurality of first three-port wavelength division multiplexing devices are connected in series; and the fourth port of each of the first three-port wavelength division multiplexing devices is correspondingly connected to the first reflecting output of one of the first four-port wavelength division multiplexing devices.

4. The aggregation device according to claim 3, wherein
the first three-port wavelength division multiplexing device comprises the first component, and the first component comprises:
a single-fiber collimator, wherein the fourth port is arranged on the single-fiber collimator;
a dual-fiber collimator, wherein the third port and the first input are arranged on the dual-fiber collimator; and
a first thin film filter, wherein the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the first three-port wavelength division multiplexing devices are different; and
the first four-port wavelength division multiplexing device comprises the first component, and the first component comprises:
a first reflecting component, wherein the first reflecting component comprises a first optical fiber and a second optical fiber, the first optical fiber comprises the first port, and the second optical fiber comprises the second reflecting output; and
a second reflecting component, wherein the second reflecting component comprises a third optical fiber and a fourth optical fiber, the third optical fiber comprises the second port, and the fourth optical fiber comprises the first reflecting output.

5. The aggregation device according to claim 2, wherein
the first wavelength division multiplexing component comprises:
a plurality of third three-port wavelength division multiplexing devices, wherein each of the third three-port wavelength division multiplexing devices comprises the first port, the first component, a third reflecting output, and a first output; wherein in the plurality of third three-port wavelength division multiplexing devices, the first port of one of the third three-port wavelength division multiplexing devices is connected to the core optical module, and in the remaining third three-port wavelength division multiplexing devices, the first port of one of two adjacent third three-port wavelength division multiplexing devices is connected to the third reflecting output of the other third three-port wavelength division multiplexing device, so that the plurality of third three-port wavelength division multiplexing devices are connected in series; and
a plurality of second three-port wavelength division multiplexing devices, wherein each of the second three-port wavelength division multiplexing devices comprises the second port, the first component, the first reflecting output, and a second input, wherein the second input of each of the second three-port wavelength division multiplexing devices is correspondingly connected to the first output of one of the third three-port wavelength division multiplexing devices, so that the plurality of second three-port wavelength division multiplexing devices and the plurality of third three-port wavelength division multiplexing devices are correspondingly connected; and the second port of each of the second three-port wavelength division multiplexing devices is correspondingly connected to one of the bidirectional access optical modules; and
the second wavelength division multiplexing component comprises a plurality of first three-port wavelength division multiplexing devices, and each of the first three-port wavelength division multiplexing devices comprises the third port, the first component, the fourth port, and a first input; wherein in the second wavelength division multiplexing component, the third port of one of the first three-port wavelength division multiplexing devices is connected to the core optical module, and in the remaining first three-port wavelength division multiplexing devices, the third port of one of two adjacent first three-port wavelength division multiplexing devices is connected to the first input of the other first three-port wavelength division multiplexing device, so that the plurality of first three-port wavelength division multiplexing devices are connected in series; and the fourth port of each of the first three-port wavelength division multiplexing devices is correspondingly connected to the first reflecting output of one of the second three-port wavelength division multiplexing devices.

6. The aggregation device according to claim 5, wherein
the first three-port wavelength division multiplexing device comprises the first component, and the first component comprises a dual-fiber collimator, a single-fiber collimator, and a first thin film filter, wherein the fourth port is arranged on the single-fiber collimator, the third port and the first input are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the first three-port wavelength division multiplexing devices are different;
the second three-port wavelength division multiplexing device comprises the first component, and the first component comprises a dual-fiber collimator, a single-fiber collimator, and a first thin film filter, wherein the second input is arranged on the single-fiber collimator, the second port and the first reflecting output are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the second three-port wavelength division multiplexing devices are different; and
the third three-port wavelength division multiplexing device comprises the first component, and the first component comprises a dual-fiber collimator, a single-fiber collimator, and a first thin film filter, wherein the first output is arranged on the single-fiber collimator, the first port and the third reflecting output are arranged on the dual-fiber collimator, the first thin film filter is arranged on a collimating lens of the dual-fiber collimator, and the first thin film filter allows light of some wavelengths to be transmitted and allows light of some other wavelengths to be reflected, and transmission wavelengths of the first thin film filters of the third three-port wavelength division multiplexing devices are different.

7. The aggregation device according to claim 1, comprising:
a first wavelength division multiplexing component, comprising:
the first port;
the plurality of first components; and
a plurality of first outputs, wherein the plurality of first outputs are configured to output the plurality of downlink optical signals to a plurality of corresponding fourth ports in a second wavelength division multiplexing component respectively; and
the second wavelength division multiplexing component, comprising:
the third port;
the plurality of first components;
the plurality of fourth ports, wherein the plurality of first outputs are correspondingly connected to the plurality of fourth ports; and
the plurality of second ports, wherein the second wavelength division multiplexing component reflects the plurality of downlink optical signals to the plurality of corresponding bidirectional access optical modules respectively through the plurality of second ports.

8. The aggregation device according to claim 7, wherein
the first wavelength division multiplexing component comprises a plurality of third three-port wavelength division multiplexing devices, and each of the third three-port wavelength division multiplexing devices comprises the first port, a third reflecting output, the first component, and the first output; wherein in the first wavelength division multiplexing component, the first port of one of the third three-port wavelength division multiplexing devices is connected to the core optical module, and in the remaining third three-port wavelength division multiplexing devices, the first port of one of two adjacent third three-port wavelength division multiplexing devices is connected to the third reflecting output of the other third three-port wavelength division multiplexing device, so that the plurality of third three-port wavelength division multiplexing devices are connected in series; and
the second wavelength division multiplexing component comprises:
a plurality of first three-port wavelength division multiplexing devices, wherein each of the first three-port wavelength division multiplexing devices comprises the fourth port, the first component, the third port, and a first input; wherein in the plurality of first three-port wavelength division multiplexing devices, the third port of one of the first three-port wavelength division multiplexing devices is connected to the core optical module, and in the remaining first three-port wavelength division multiplexing devices, the third port of one of two adjacent first three-port wavelength division multiplexing devices is connected to the first input of the other first three-port wavelength division multiplexing device, so that the plurality of first three-port wavelength division multiplexing devices are connected in series; and
a plurality of fourth three-port wavelength division multiplexing devices, wherein each of the fourth three-port wavelength division multiplexing devices comprises the second port, the first component, a second output, and a fourth input; wherein the fourth input of each of the fourth three-port wavelength division multiplexing devices is correspondingly connected to the first output of one of the third three-port wavelength division multiplexing devices, so that the plurality of fourth three-port wavelength division multiplexing devices and the plurality of third three-port wavelength division multiplexing devices are correspondingly connected; the second port of each of the fourth three-port wavelength division multiplexing devices is correspondingly connected to one of the bidirectional access optical modules; and the second output of each of the fourth three-port wavelength division multiplexing devices is correspondingly connected to the fourth port of one of the first three-port wavelength division multiplexing devices.

9. The aggregation device according to claim 8, wherein
the first three-port wavelength division multiplexing device comprises the first component, and the first component comprises a dual-fiber collimator, a single-fiber collimator, and a first thin film filter, wherein the fourth port is arranged on the single-fiber collimator, the third port and the first input are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the first three-port wavelength division multiplexing devices are different;
the third three-port wavelength division multiplexing device comprises the first component, and the first component comprises a dual-fiber collimator, a single-fiber collimator, and a first thin film filter, wherein the first output is arranged on the single-fiber collimator, the first port and the third reflecting output are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the third three-port wavelength division multiplexing devices are different; and
the fourth three-port wavelength division multiplexing device comprises the first component, and the first component comprises a dual-fiber collimator, a single-fiber collimator, and a first thin film filter, wherein the second output is arranged on the single-fiber collimator, the second port and the fourth input are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the fourth three-port wavelength division multiplexing devices are different.

10. The aggregation device according to claim 7, wherein
the first wavelength division multiplexing component comprises a plurality of third three-port wavelength division multiplexing devices, and each of the third three-port wavelength division multiplexing devices comprises the first port, the first component, a third reflecting output, and a first output; wherein in the first wavelength division multiplexing component, the first port of one of the third three-port wavelength division multiplexing devices is connected to the core optical module, and in the remaining third three-port wavelength division multiplexing devices, the first port of one of two adjacent third three-port wavelength division multiplexing devices is connected to the third reflecting output of the other third three-port wavelength division multiplexing device, so that the plurality of third three-port wavelength division multiplexing devices are connected in series; and
the second wavelength division multiplexing component comprises a plurality of second four-port wavelength division multiplexing devices, and each of the second four-port wavelength division multiplexing devices comprises the third port, the fourth port, the first component, the second port, and a third input; wherein in the second wavelength division multiplexing component, the third port of one of the second four-port wavelength division multiplexing devices is connected to the core optical module, and in the remaining second four-port wavelength division multiplexing devices, the third input of one of two adjacent second four-port wavelength division multiplexing devices is connected to the third port of the other second four-port wavelength division multiplexing device, so that the plurality of second four-port wavelength division multiplexing devices are connected in series; the second port of each of the second four-port wavelength division multiplexing devices is correspondingly connected to one of the bidirectional access optical modules; and the fourth port of each of the second four-port wavelength division multiplexing devices is correspondingly connected to the first output of one of the third three-port wavelength division multiplexing devices, so that the plurality of second four-port wavelength division multiplexing devices and the plurality of third three-port wavelength division multiplexing devices are correspondingly connected.

11. The aggregation device according to claim 10, wherein
the third three-port wavelength division multiplexing device comprises the first component, and the first component comprises a dual-fiber collimator, a single-fiber collimator, and a first thin film filter, wherein the first output is arranged on the single-fiber collimator, the first port and the third reflecting output are arranged on the dual-fiber collimator, the first thin film filter is arranged on a collimating lens of the dual-fiber collimator, the first thin film filter allows light of some wavelengths to be transmitted and allows light of some other wavelengths to be reflected, and transmission wavelengths of the first thin film filters of the third three-port wavelength division multiplexing devices are different; and
the second four-port wavelength division multiplexing device comprises the first component, and the first component comprises a first reflecting component and a second reflecting component, wherein the first reflecting component comprises a first optical fiber and a second optical fiber, the second reflecting component comprises a third optical fiber and a fourth optical fiber, the first optical fiber comprises the fourth port, the third optical fiber comprises the third input, the second optical fiber comprises the second port, and the fourth optical fiber comprises the third port.

12. The aggregation device according to claim 4 or 11, wherein
the first reflecting component further comprises a first focusing lens and a first WDM filter, the first focusing lens is arranged on a first dual optical fiber, and the first WDM filter is arranged on the first focusing lens; wherein the first dual optical fiber comprises the first optical fiber and the second optical fiber; and
the second reflecting component further comprises a second focusing lens and a second WDM filter, the second focusing lens is arranged on a second dual optical fiber, and the second WDM filter is arranged on the second focusing lens; wherein the second dual optical fiber comprises the third optical fiber and the fourth optical fiber.

13. The aggregation device according to claim 12, wherein the first four-port wavelength division multiplexing device or the second four-port wavelength division multiplexing device further comprises:
a first glass tube, wherein the first glass tube is configured to connect the first reflecting component and the second reflecting component;
a second glass tube, wherein the second glass tube is arranged in the first glass tube, and the first reflecting component is arranged in the second glass tube; and
a third glass tube, wherein the third glass tube is arranged in the first glass tube, and the second reflecting component is arranged in the third glass tube.

14. The aggregation device according to any one of claims 1 to 13, wherein the aggregation device further comprises a connection port; the connection port is connected to the core optical module through a second single-core optical fiber; and the first port and the third port are both connected to the connection port.

15. The aggregation device according to any one of claims 1 to 14, wherein the aggregation device comprises a thin film filter type device or an array waveguide grating.

16. A bidirectional access optical module, arranged in an access layer of a communication network, and comprising:
a downlink optical signal input, configured to input a downlink optical signal from an aggregation device;
a sending end, configured to output the downlink optical signal and input an uplink optical signal;
an uplink optical signal output, configured to output the uplink optical signal to the aggregation device; and
a second thin film filter, configured to transmit the downlink optical signal to the sending end and reflect the uplink optical signal to the uplink optical signal output, wherein the second thin film filter is obliquely arranged on an optical path for the uplink optical signal and the downlink optical signal.

17. The bidirectional access optical module according to claim 16, wherein the second thin film filter is arranged at an inclination angle of 0 degrees to 45 degrees.

18. An optical network system, comprising a core optical module arranged in a core layer of a communication network, the aggregation device according to any one of claims 1 to 15, and a plurality of bidirectional access optical modules arranged in an access layer of the communication network.
